# EUROPEAN PATENT SPECIFICATION

(11) **EP 4 015 884 B1**
(45) Date of publication and mention of the grant of the patent: **03.07.2024**
(21) Application number: 20215451.4
(22) Date of filing: 18.12.2020
(51) Int. Cl.: F16K 31/56, F04B 53/06, F04B 53/10, F16K 24/00, F04D 9/00

(54) **VENTING VALVE**
ENTLÜFTUNGSVENTIL
SOUPAPE D'ÉVENT

(43) Date of publication of application: 22.06.2022
(73) Proprietor: Grundfos Holding A/S, 8850 Bjerringbro (DK)
(72) Inventor: Jæger, Tom, 8850 Bjerringbro (DK)
(74) Representative: Plougmann Vingtoft a/s

(56) References cited:
- EP-A1- 3 364 043
- US-A1- 2013 233 396
- US-A1- 2019 300 359

## Description

### FIELD OF THE INVENTION

The present invention relates to a venting valve for venting an enclosure, such as an inner volume of a pump. In particular, it relates to a venting valve comprising a bi-stable component ensuring that the venting valve is either fully closed or fully open. The venting valve is designed so that it only changes from the closed to the open state upon activation, i.e. in a controlled manner.

### BACKGROUND OF THE INVENTION

Venting of an enclosure is needed for a number of applications, including venting of an inner volume of a pump during starting up of the pump. Usually this is done by releasing a screw which opens a channel that lets the air escape from the inner volume and into the environment. When a pump is used for pumping toxic or otherwise dangerous substances, the substance must be released in a controlled way, usually through a hose. The traditional design of such a venting valve contains a housing, a spindle, a seal, and a nut. The spindle is connected to the housing by a threading. However, with such a design, it can be difficult to avoid a sudden or un-controlled escape of the substance from inside the pump.

With known venting valves suitable for use with pumps, the valve housing typically contains a radially mounted connector for the hose and a threading for forming the connection to the pump. To position the housing when mounted, a nut is needed. With such a known design, it can be difficult or impossible to ensure that the connection is pointing in a desired direction with respect to the location of an outlet or container for the substance being removed from the pump during the venting. This can lead to uncontrolled venting, and an additional length of the hose as well as space therefore is needed.

EP 3 364 043 A1 discloses a pump unit with a pump housing and a suction space formed in this housing. The pump unit has a discharge connection with a valve device which makes it possible in a first switching position to open a first connection and in a second switch position to open at least a second connection. Hence, an improved venting valve would be advantageous, and in particular a more efficient and/or reliable venting valve would be advantageous.

### OBJECT OF THE INVENTION

It is an object of the present invention to provide a venting valve which will only change from a closed to an open state upon application of an external activation force.

It is another object of the present invention to provide a venting valve with which the venting of an enclosure in fluid communication with the venting valve can be performed in a controlled manner.

It is another object of the present invention to provide a venting valve which can be made more compact than known venting valves.

It is an object of at least some embodiments of the present invention to provide a venting valve which is composed of fewer parts than known venting valves. In particular, it is an object of at least some embodiments to provide a venting valve which can be manufactured in one piece.

It is another object of at least some embodiments of present invention to provide a venting valve having a more efficient manufacturing process than known venting valves.

It is a further object of the present invention to provide an alternative to the prior art.

In particular, it may be seen as an object of the present invention to provide a venting valve that solves the above mentioned problems of the prior art.

### SUMMARY OF THE INVENTION

Thus, the above-described object and several other objects are intended to be obtained in a first aspect of the invention by providing a venting valve for venting an enclosure, such as an inner volume of a pump, at least occasionally during use, the venting valve comprising:
- a valve housing comprising a circumferential and inwardly extending valve seat, the valve seat having a first opening,
- a first passage through the valve seat,
- a displaceable member having a longitudinal extension and being arranged through the first opening so that it is longitudinally displaceable, the displaceable member comprising:
   - a valve plug being located at a first side of the valve seat, the valve plug having:
      - a circumferential valve region dimensioned, shaped, and arranged to form a second passage extending from the enclosure to be vented during use of the venting valve towards the valve seat, and
      - an end surface configured to face towards the enclosure to be vented during use of the venting valve, and
   - a discharge part being located at a second side of the valve seat, the discharge part having a wall surrounding an inner discharge channel, and

characterized by:
   a) a bi-stable annular disc which is fluid-tightly connected to an outer surface of the discharge part along an inner circumference of the annular disc, and fluid-tightly connected to an inner surface of the valve housing along an outer circumference of the annular disc, so that a venting volume is provided delimited by the valve housing, the discharge part, and the annular disc, or
   b) a combination of a membrane and at least one bi-stable element, wherein the membrane is fluid-tightly connected to an outer surface of the discharge part along an inner circumference of the membrane, and fluid-tightly connected to an inner surface of the valve housing along an outer circumference of the membrane, so that a venting volume is provided delimited by the valve housing, the discharge part, and the membrane; and wherein the at least one bi-stable element is arranged circumferentially and extending between the wall of the discharge part and the inner surface of the valve housing,
wherein the discharge channel is in fluid communication with the venting volume via a second opening provided in the wall of the discharge part,
wherein the displaceable member can assume:
   - a closed position in which the valve plug is in sealing engagement with the valve seat so that there is no fluid communication between the second passage and the discharge channel, and
   - an open position in which the valve plug is out of engagement with the valve seat so that the second passage is in fluid communication with the discharge channel via the first passage, the venting volume, and the second opening, and
wherein the displaceable member is configured to move from the closed to the open position upon application of an activation force to the displaceable member in the longitudinal direction thereof.

The movement of the displaceable member from the open to the closed position may take place upon application of an external closing force to the displaceable member, or it may happen automatically due to a pressure in fluid present in the enclosure.

By use of such a venting valve, it is possible to ensure a controlled venting of the enclosure, because the fluid present in the enclosure can only flow out via the discharge channel, and because this can only happen when the valve plug is in the open position. Such a controlled venting is e.g. important in relation to a pump used for the pumping of toxic or otherwise dangerous substances. The substance should then preferably be collected in a controlled manner, such as in a closed container, and there should be no escape to the surroundings.

What is referred to here and in the following as "venting" could also be called airing or de-aeration.

The valve seat will typically be in the form of a flange. Examples of such an embodiment will be given in the figures. However, other shapes, such as curved annular protrusions, are also covered by the scope of protection as long as a sealing engagement with the valve plug in the closed position is ensured.

In some embodiments of the invention, the circumferential valve region is dimensioned, shaped, and arranged to form the second passage between the valve housing and the valve plug; such an example will be illustrated in the figures. Such a second passage may be annular and extend all the way around the valve plug. However, the scope of protection also covers interrupted second passages, such as slits, so that the valve plug slides along the inner surface of the valve housing in some regions. The valve plug may also slide along the inner surface of the valve housing over the whole of the circumferential surface of the valve plug provided that the circumferential region is provided with at least one passage in the form of a through-going hole.

The first passage and/or the second passage may each be formed by one or more flow paths through which fluid can flow from the enclosure to the discharge channel.

What is worded as "an end surface configured to face towards the enclosure to be vented" could alternatively be worded as "an end surface configured to face away from the valve seat".

The bi-stable annular disc may be referred to as a "snap disc" because of the bi-stable properties that makes it snap from one configuration to another upon application of a force sufficiently large to provide this change. Thus, the annular disc should be of the type designed to change configuration dependent on the applied force or pressure. This may also be referred to as a "snap function" or a "snap action".

In the embodiments comprising alternative a) as mentioned above, the annular disc provides both the snap function used for moving the valve plug between the two stable positions and the fluid-tightness of the venting volume. In the embodiments comprising alternative b) as mentioned above, these two functions are provided by different parts of the venting valve, namely the at least one bi-stable element and the membrane, respectively. Such a membrane may also be referred to as a bellow. In some embodiments of the invention, the membrane is annular. The at least one bi-stable element is preferably arranged in the venting volume, but it could also be arranged on the opposite side of the membrane.

The thickness of the annular disc as well as the dimensions and the number of the bi-stable elements will be determined as part of the design process for a given application of the venting valve. These parameters will e.g. depend on the overall size of the venting valve and the materials used. The parameters will typically be determined by computer simulations, such as Finite Element Analysis, possibly supplemented with physical experiments. The thickness of the annular disc may be constant or it may vary.

The activation force necessary to move the displaceable member from the closed to the open position depends both on the mechanical properties of the parts of the venting valve to be deformed and on the pressure in the enclosure. The bi-stable annular disc or the at least one bi-stable element should preferably be designed so that the venting valve functions as intended independent on the pressure in the enclosure, such as even when the pressure in the enclosure is the same as in the surroundings.

The design of the venting valve ensures that when the venting valve is used for applications, wherein a pressure increase may take place in the enclosure, such a pressure increase will not result in an unintended opening of the venting valve. On the contrary, an increase in the pressure in the enclosure will force the valve plug towards the valve seat without acting on the annular disc or membrane that might otherwise have been damaged.

The venting valve may be made from metal, such as e.g. titanium or stainless steel. Which material to choose will depend on the application of the venting valve, as it must be ensured that it is not negatively influenced by the content of the fluid to flow there through. However, the scope of protection also covers other types of materials, such as polymers, polymer composites, cermets, and ceramics as long as they can be shaped into the desired geometry.

In some embodiments of the invention, the first opening and the displaceable member are dimensioned so that at least a part of the first passage is formed there between. Alternatively or in combination therewith, at least a part of the first passage is formed by at least one third opening in the valve seat, the at least one third opening being arranged so that, during use, there is no flow of fluid there through when the displaceable member is in the closed position.

In some embodiments of the invention, the venting valve is one unitary component. Hereby the total manufacturing process can be made more efficient than for traditional valves being made from more parts to be assembled. This is because no assembly surfaces or assembly elements are to be made, and because no assembly process is necessary. Furthermore, the logistics is made more efficient, since there is no need for storage and handling of individual not yet assembled parts.

The venting valve may be made by additive manufacturing. Such a method may also be referred to as 3D printing. Examples of possible additive manufacturing methods are binding jetting where a binder is used to fuse powder into the desired component before a subsequent sintering process or powder bed fusion which is a technique that uses an energy source like e.g. a laser to melt powder into the desired component.

In some embodiments of the invention, the venting valve is configured to have the activation force applied manually, such as the venting valve being provided with at least one gripping surface. Such a gripping surface may e.g. be an outer surface of the discharge part. Provided that it is stiff and strong enough to transfer the necessary force, the activation force may also be applied to a discharge element, such as a hose, when present; see more details about such a discharge element below.

Alternatively or in combination therewith, the venting valve may be configured to have the activation force applied by an actuator, such as an actuator operated by a control unit. Such a control unit may also be controlling other elements, such as a pump on which the venting valve is mounted for venting of an inner volume of a pump component of the pump. Hereby the venting may be an integrated part of the controlling of the pump.

A venting valve according to the present invention may further comprise at least one support element arranged in the venting volume and extending between the wall of the discharge part and the inner surface of the valve housing in order to support the discharge part in the radial direction. Hereby the movement of the displaceable member may be stabilized, if necessary, so that the risk of potential malfunctioning is minimized.

The at least one bi-stable element as described above may be in the form of a plurality of deformable pins. An example of such an embodiment will be shown in the figures. It may also be in the form of a disc shaped element, such as a porous element.

The sealing engagement between the valve plug and the valve seat may be obtained by correspondingly shaped sealing surfaces. Some illustrative examples of such shapes will be shown in the figures.

At least a part of the valve plug may be made from a resilient material, such as rubber or TPE, which can elastically deform due to engagement with the valve seat. Such deformation may be used to obtain an improved sealing effect so that the tolerances with respect to dimensions and roughness of the engaging surfaces can be lowered without compromising the safety against unintended leakage through the venting valve.

The discharge part may be configured to be connected to an associated discharge element, such as a hose, during use of the venting valve. Such a discharge element is typically used to move the fluid from the enclosure being vented into a storage, such as a closed container arranged at a distance from the enclosure. In embodiments without such a discharge element, the discharge part continues all the way to the storage. However, for some applications, it may also be possible to just let the fluid escape into the surroundings. When the discharge element is in the form of a hose made from deformable material, the connection is typically established by forcing the hose onto the discharge part so that it stays in place due to friction and deformation. However, additional clamping means may also be used to ensure a safe connection that does not disassemble unintentionally.

In embodiments of the invention in which the discharge part is configured to be connected to an associated discharge element, the discharge part may be configured to be connected to the associated discharge element during use of the venting valve in such a manner that the discharge element extends axially away from the discharge part. Hereby it is obtained that the connection can easily be established independently of the rotational orientation of the venting valve. Furthermore, the discharge element can lead the fluid away from the venting valve without any need for a curved course of the discharge element as might otherwise be necessary for known venting valves having the connection extending radially.

In any of the embodiments as described above, the valve housing may be configured to be attached to a pump component, such as a pump housing. It may e.g. be configured to be attached via at least one threaded connection, by additional elements like screws, or by welding.

In a second aspect, the invention relates to a pump component surrounding an enclosure to be vented at least occasionally during use, the pump component comprising a venting valve as described above. Such a pump component may e.g. be a pump housing. In some of such embodiments, the pump component and the venting valve are integrally made. Hereby the venting valve will be a feature of the pump component instead of being a separate component, and it will be possible to test and certify the functioning of the venting valve as part of a quality control or approval process.

In a third aspect, the invention relates to a method of manufacturing a venting valve according to the first aspect of the invention or a pump component according to a second aspect of the invention, wherein the manufacturing is done by additive manufacturing.

The first, second and third aspects of the present invention may each be combined with any of the other aspects. These and other aspects of the invention will be apparent from and elucidated with reference to the embodiments described hereinafter.

### BRIEF DESCRIPTION OF THE FIGURES

The venting valve according to the invention will now be described in more detail with regard to the accompanying figures. The figures show one way of implementing the present invention and is not to be construed as being limiting to other possible embodiments falling within the scope of the attached claim set.
Figure 1 schematically shows how a venting valve according to the present invention can be used for the venting of an inner volume of a pump housing.
Figure 2 schematically shows a cross-sectional view of an embodiment of a venting valve having the displaceable member in the open position.
Figure 3 schematically shows a cross-sectional view of the venting valve in figure 2 having the displaceable member in the closed position.
Figures 4.a and figure 4.b schematically show the flow and no-flow of fluid in the embodiments of figures 2 and 3, respectively.
Figure 5 schematically shows examples of how the sealing engagement between the valve plug and the valve seat can be obtained. Figure 5.a shows the encircled area which is shown in enlarged views in figure 5.b.
Figure 6 schematically shows a cross-sectional view of another embodiment of a venting valve having a part of the second passage provided in the valve plug. Figures 6.a and 6.b show the displaceable member in the open and closed positions, respectively.
Figure 7 schematically shows a cross-sectional view of another embodiment of a venting valve having a part of the first passage provided as third openings in the valve seat. Figures 7.a and 7.b show the displaceable member in the open and closed positions, respectively.
Figure 8 schematically shows a cross-sectional view of another embodiment of a venting valve comprising bi-stable elements and a membrane. The venting valve is shown with the displaceable member in the open position.

### DETAILED DESCRIPTION OF AN EMBODIMENT

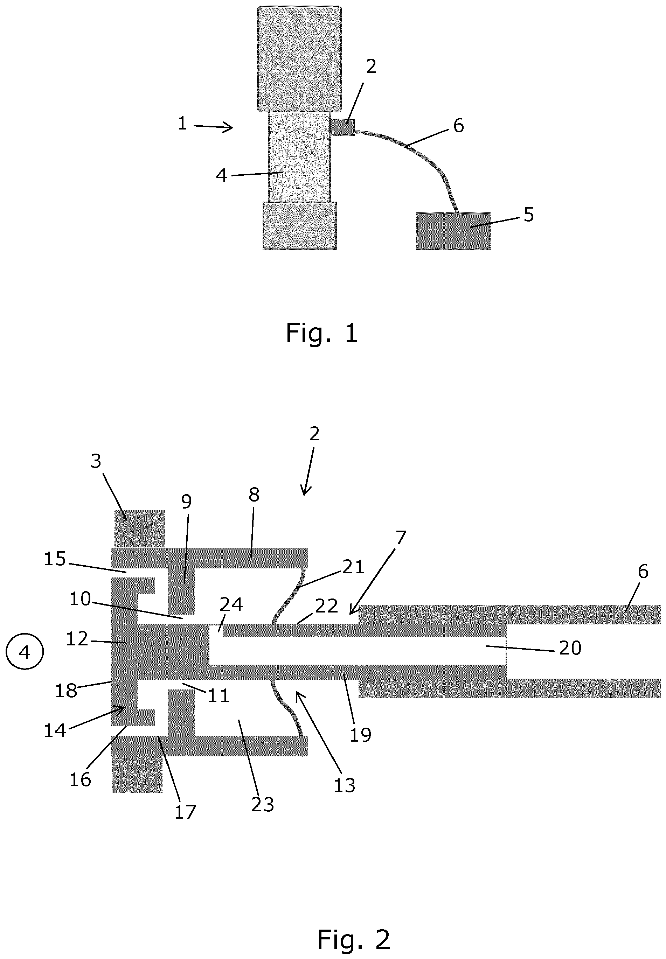

The present invention has been designed for use within the technical field of pumps, but it may also find use in other applications where there is a need for a controlled venting of an enclosure. Figure 1 schematically shows a pump 1 having a venting valve 2 mounted to a pump element 3, such as a pump housing. The pump element 3 has an enclosure 4 that is to be vented at least occasionally during use, such as a least during start-up of the pump 1. From the enclosure 4, the fluid exiting through the venting valve 2 is led to an external container 5 for storage via a hose forming the discharge element 6 in this embodiment.

A schematical cross-sectional view of an embodiment of a venting valve 2 according to the present invention is shown in figure 2, wherein the venting valve 2 is shown in an open state, i.e. with the displaceable member 7 in the open position. The venting valve 2 comprises a valve housing 8 having a circumferential and inwardly extending valve seat 9. In this embodiment, the valve seat 9 is in the form of a flange. The valve seat 9 has a first opening 10 which in this embodiment is centrally arranged. However, the scope of protection also covers embodiments in which the valve housing 8 has a shape that makes it relevant to use a non-central first opening 10. The venting valve 2 has a displaceable member 7 having a longitudinal extension and being arranged through the first opening 10 so that it is longitudinally displaceable. In this embodiment, the first opening 10 and the displaceable member 7 are dimensioned so that a first passage 11 is formed there between. The displaceable member 7 comprises a valve plug 12 being located at a first side of the valve seat 9 and a discharge part 13 being located at a second side of the valve seat 9. The valve plug 12 has a circumferential valve region 14 dimensioned, shaped, and arranged to form a second passage 15 between the enclosure 4 and the valve seat 9. In this embodiment, the second passage 15 is an annular passage formed between an outer circumferential surface 16 of the valve plug 12 and an inner surface 17 of the valve housing 8. The valve plug 12 further has an end surface 18 that is configured to face towards the enclosure 4 to be vented during use of the venting valve 2. The discharge part 13 has a wall 19 surrounding an inner discharge channel 20. In the embodiment shown in figure 2, the discharge part 13 is connected to a discharge element 6 which may be a hose as shown in figure 1. The discharge part 13 should preferably be configured to be connected to the discharge element 6 in such a manner that the discharge element 6 extends axially away from the discharge part 13, such as illustrated in figure 2. Hereby it is obtained that the connection can easily be established independently of the rotational orientation of the venting valve 2. This would not be the case, if the discharge part 13 of the venting valve 2 extended radially away from the longitudinal extension of the displaceable member 7, as is often the case for known venting valves.

The venting valve 2 in figure 2 has a bi-stable annular disc 21 which is fluid-tightly connected to an outer surface 22 of the discharge part 13 along an inner circumference of the annular disc 21, and fluid-tightly connected to an inner surface 17 of the valve housing 8 along an outer circumference of the annular disc 21. Hereby a venting volume 23 is provided delimited by the valve housing 8, the discharge part 13, and the bi-stable annular disc 21. The discharge channel 20 is in fluid communication with the venting volume 23 via a second opening 24 provided in the wall 19 of the discharge part 13. As shown schematically in the figures, the venting valve 2 can be made as one unitary component which may e.g. have been made by additive manufacturing as described above.

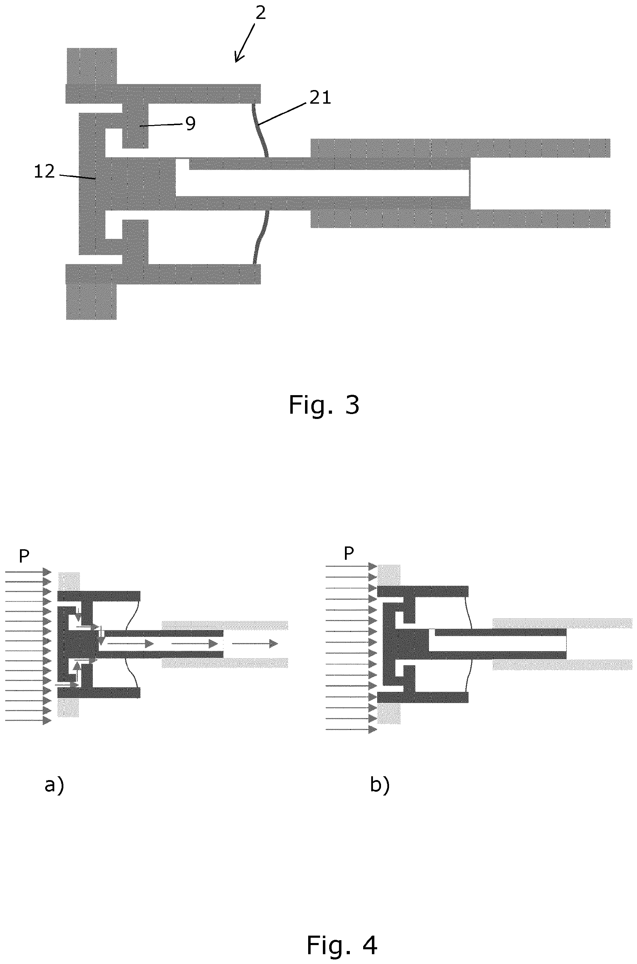

The displaceable member 7 can assume a closed position as shown in figure 3 and an open position as shown in figure 2. In the closed position, the valve plug 12 is in sealing engagement with the valve seat 9 so that there is no fluid communication between the second passage 15 and the discharge channel 20. In the open position, the valve plug 12 is out of engagement with the valve seat 9 so that the second passage 15 is in fluid communication with the discharge channel 20 via the first passage 11, the venting volume 23, and the second opening 24. Due to the bi-stable annular disc 21, the displaceable member 7 is configured to move, by a snap action, from the closed to the open position upon application of an activation force to the displaceable member 7 in the longitudinal direction thereof. The activation force may e.g. be applied manually or by an actuator (not shown), such as an actuator operated by a control unit (not shown). When it is applied manually, it may e.g. be done by using the outer surface 22 of the discharge part 13 as a gripping surface. However, the discharge part 13 may also be provided with other elements, such as a protrusion, having the gripping surface.

Figure 4 schematically shows the functioning of the venting valve 2. In figure 4.a, the fluid in the enclosure 4 has a pressure P which is illustrated by the row of arrows pointing towards the end surface 18 of the valve plug 12. The displaceable member 7 is in the open position in figure 4.a so that fluid can flow towards and out of the discharge channel 20 as illustrated by the arrows. In figure 4.b, the displaceable member 7 is in the closed position with the valve plug 12 engaged with the valve seat 9. In this position, the pressure P will only increase the closing pressure and there is no flow of fluid through the venting valve 2.

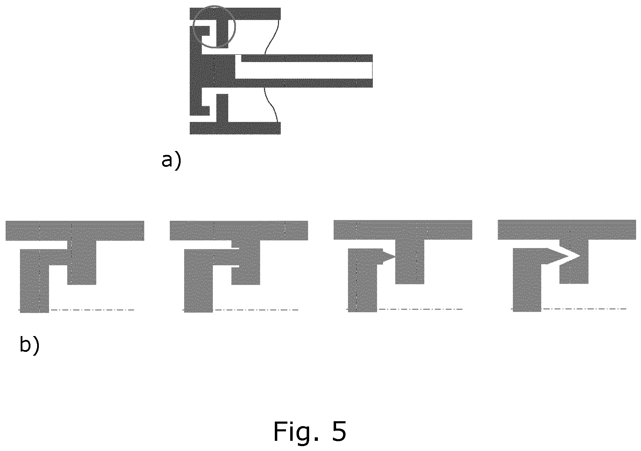

The sealing engagement between the valve plug 12 and the valve seat 9 may be obtained by correspondingly shaped sealing surfaces as is illustrated in figure 5. Figure 5.a shows the encircled region where the sealing engagement is to be established, and figure 5.b schematically shows an enlarged view of different possible shapes. Other shapes than the illustrated ones are also covered by the scope of protection; e.g. the surfaces could be curved. At least a part of the valve plug 12 can be made from a resilient material, such as rubber or TPE, which can elastically deform due to engagement with the valve seat 9. Such deformable materials may be used for any of the illustrated shapes of corresponding surfaces.

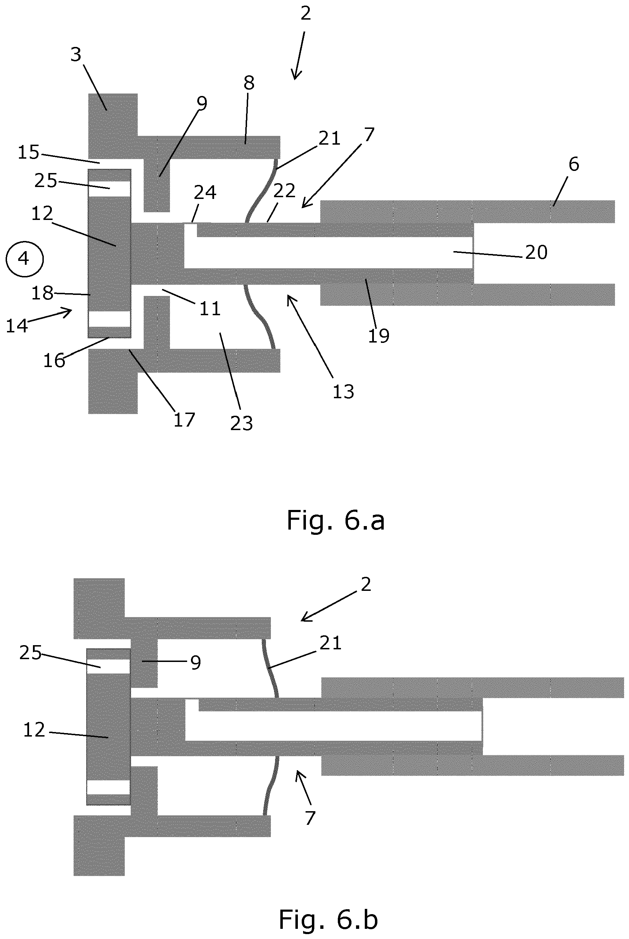

An alternative embodiment of the valve plug 12 is schematically shown in cross-sectional view in figure 6. Figure 6.a shows the open position, and figure 6.b shows the closed position. The valve plug 12 is provided through-going holes 25 forming the second passage together with the flow path present between the outer circumferential wall surface 16 of the valve plug 12 and the inner surface 17 of the valve housing 8. The scope of protection also covers similar embodiments, wherein the outer circumferential wall surface 16 of the valve plug 12 slides along the inner surface 17 of the valve housing 8 when the displaceable member 7 moves between the first and second positions.

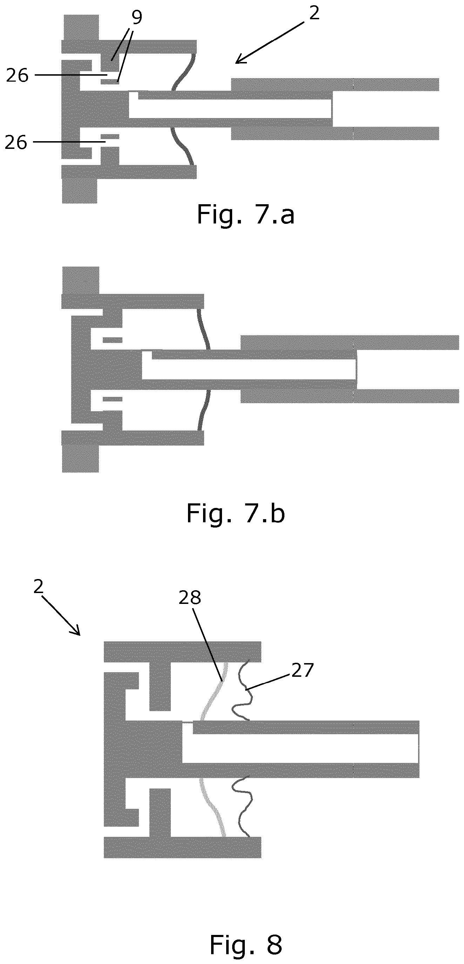

Figure 7 schematically shows a cross-sectional view of another embodiment of a venting valve 2 having a part of the first passage 11 is formed by third openings 26 in the valve seat 9. Figures 7.a and 7.b show the displaceable member 7 in the open and closed positions, respectively. In order for the venting valve 2 to function as intended, the third openings 26 should be arranged so that, during use, there is no flow of fluid there through when the displaceable member 7 is in the closed position as seen from figure 7.b.

Figure 8 schematically shows an alternative way of obtaining the functioning of a venting valve 2 as described for the previous figures. In this embodiment, the venting valve 2 comprises a combination of a membrane 27 and at least one bi-stable element 28. The shape of the membrane 27 shown in figure 8 is just to illustrate schematically that it is a flexible material; the real shape may be different. The venting valve is shown with the displaceable member 7 in the open position. The at least one bi-stable element 28 may e.g. be a plurality of deformable pins or an annular disc. Since figure 8 shows a cross-sectional view, these alternatives would look the same. The membrane 27 is fluid-tightly connected to an outer surface 22 of the discharge part 13 along an inner circumference of the membrane 27, and fluid-tightly connected to an inner surface 17 of the valve housing 8 along an outer circumference of the membrane 27. Hereby a venting volume 23 is provided delimited by the valve housing 8, the discharge part 13, and the membrane 27. The at least one bi-stable element 28 is arranged circumferentially and extending between the wall 19 of the discharge part 13 and the inner surface 17 of the valve housing 8. The membrane 27 and the at least one bi-stable element 28 could also be arranged at other mutual locations than those shown in the figure, such as closer to each other.

In any of the embodiments as described above, the venting valve 2 may further comprise at least one support element (not shown) arranged in or outside the venting volume 23 and extending between the wall 19 of the discharge part 13 and the inner surface 17 of the valve housing 8 in order to support the discharge part 13 in the radial direction. Such a support element could e.g. be a bi-stable pin used in combination with a bi-stable annular disc.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Furthermore, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Venting valve (2) for venting an enclosure (4), such as an inner volume of a pump (1), at least occasionally during use, the venting valve (2) comprising:
- a valve housing (8) comprising a circumferential and inwardly extending valve seat (9), the valve seat (9) having a first opening (10),
- a first passage (11) through the valve seat (9),
- a displaceable member (7) having a longitudinal extension and being arranged through the first opening (10) so that it is longitudinally displaceable, the displaceable member (7) comprising:
- a valve plug (12) being located at a first side of the valve seat (9), the valve plug (12) having:
- a circumferential valve region (14) dimensioned, shaped, and arranged to form a second passage (15) extending from the enclosure (4) to be vented during use of the venting valve (2) towards the valve seat (9), and
- an end surface (18) configured to face towards the enclosure (4) to be vented during use of the venting valve (2), and
- a discharge part (13) being located at a second side of the valve seat (9), the discharge part (13) having a wall (19) surrounding an inner discharge channel (20), and
**characterized by**:
a) a bi-stable annular disc (21) which is fluid-tightly connected to an outer surface (22) of the discharge part (13) along an inner circumference of the annular disc (21) and fluid-tightly connected to an inner surface (17) of the valve housing (8) along an outer circumference of the annular disc (21), so that a venting volume (23) is provided delimited by the valve housing (8), the discharge part (13), and the annular disc (21), or
b) a combination of a membrane (27) and at least one bi-stable element (28), wherein the membrane (27) is fluid-tightly connected to an outer surface (22) of the discharge part (13) along an inner circumference of the membrane (27) and fluid-tightly connected to an inner surface (17) of the valve housing (8) along an outer circumference of the membrane (27), so that a venting volume (23) is provided delimited by the valve housing (8), the discharge part (13), and the membrane (27); and wherein the at least one bi-stable element (28) is arranged circumferentially and extending between the wall (19) of the discharge part (13) and the inner surface (17) of the valve housing (8),
wherein the discharge channel (20) is in fluid communication with the venting volume (23) via a second opening (24) provided in the wall (19) of the discharge part (13),
wherein the displaceable member (7) can assume:
- a closed position in which the valve plug (12) is in sealing engagement with the valve seat (9) so that there is no fluid communication between the second passage (15) and the discharge channel (20), and
- an open position in which the valve plug (12) is out of engagement with the valve seat (9) so that the second passage (15) is in fluid communication with the discharge channel (20) via the first passage (11), the venting volume (23), and the second opening (24), and
wherein the displaceable member (7) is configured to move from the closed to the open position upon application of an activation force to the displaceable member (7) in the longitudinal direction thereof.

2. Venting valve (2) according to claim 1, wherein the first opening (10) and the displaceable member (7) are dimensioned so that at least a part of the first passage (11) is formed there between.

3. Venting valve (2) according to claim 1 or 2, wherein at least a part of the first passage (11) is formed by at least one third opening (26) in the valve seat (9), the at least one third opening (26) being arranged so that, during use, there is no flow of fluid there through when the displaceable member (7) is in the closed position.

4. Venting valve (2) according to any of the preceding claims, wherein the venting valve (2) is one unitary component.

5. Venting valve (2) according to any of the preceding claims, wherein the venting valve (2) has been made by additive manufacturing.

6. Venting valve (2) according to any of the preceding claims, wherein the venting valve (2) is configured to have the activation force applied manually, such as the venting valve (2) being provided with at least one gripping surface (22).

7. Venting valve (2) according to any of claims 1-5, wherein the venting valve (2) is configured to have the activation force applied by an actuator, such as an actuator operated by a control unit.

8. Venting valve (2) according to any of the preceding claims when comprising at least one bi-stable element (28), wherein the at least one bi-stable element (28) is a plurality of deformable pins.

9. Venting valve (2) according to any of the preceding claims, wherein the sealing engagement between the valve plug (12) and the valve seat (9) is obtained by correspondingly shaped sealing surfaces.

10. Venting valve (2) according to any of the preceding claims, wherein at least a part of the valve plug (12) is made from a resilient material, such as rubber or TPE, which can elastically deform due to engagement with the valve seat (9).

11. Venting valve (2) according to any of the preceding claims, wherein the discharge part (13) is configured to be connected to an associated discharge element (6), such as a hose, during use of the venting valve (2).

12. Venting valve (2) according to claim 11, wherein the discharge part (13) is configured to be connected to the associated discharge element (6) during use of the venting valve (2) in such a manner that the discharge element (6) extends axially away from the discharge part (13).

13. Venting valve (2) according to any of the preceding claims, wherein the valve housing (8) is configured to be attached to a pump component (3), such as a pump housing, surrounding an enclosure to be vented at least occasionally during use.

14. Pump component (3) surrounding an enclosure (4) to be vented at least occasionally during use, the pump component (3) comprising a venting valve (2) integrally made with the pump component (3), wherein the venting valve (2) is a venting valve (2) according to any of claims 1 to 12.

15. Method of manufacturing a venting valve (2) according to any of claims 1 to 13 or a pump component (3) according to claim 14, wherein the manufacturing is done by additive manufacturing.

## Patentansprüche

1. Entlüftungsventil (2) zum Entlüften einer Einhausung (4), wie eines Innenvolumens einer Pumpe (1), mindestens gelegentlich während der Verwendung, wobei das Entlüftungsventil (2) Folgendes umfasst:
- ein Ventilgehäuse (8), das einen umlaufenden und sich nach innen erstreckenden Ventilsitz (9) umfasst, wobei der Ventilsitz (9) eine erste Öffnung (10) aufweist,
- einen ersten Durchgang (11) durch den Ventilsitz (9),
- ein verschiebbares Element (7), das eine Längserstreckung aufweist und so durch die erste Öffnung (10) angeordnet ist, dass es in Längsrichtung verschiebbar ist, wobei das verschiebbare Element (7) Folgendes umfasst:
- einen Ventilkegel (12), der an einer ersten Seite des Ventilsitzes (9) lokalisiert ist, wobei der Ventilkegel (12) Folgendes aufweist:
- einen umlaufenden Ventilbereich (14), der dimensioniert, geformt und angeordnet ist, um einen zweiten Durchgang (15) auszubilden, der sich von der zu entlüftenden Einhausung (4) während der Verwendung des Entlüftungsventils (2) in Richtung des Ventilsitzes (9) erstreckt, und
- eine Endfläche (18), die konfiguriert ist, um während der Verwendung des Entlüftungsventils (2) in Richtung der zu entlüftenden Einhausung (4) zu weisen, und
- ein Ablaufteil (13), das an einer zweiten Seite des Ventilsitzes (9) lokalisiert ist, wobei das Ablaufteil (13) eine Wand (19) aufweist, die einen inneren Ablaufkanal (20) umgibt, und
**gekennzeichnet durch**:
a) eine bistabile Ringscheibe (21), die mit einer Außenfläche (22) des Ablaufteils (13) entlang eines inneren Umfangs der Ringscheibe (21) fluiddicht verbunden ist und mit einer Innenfläche (17) des Ventilgehäuses (8) entlang eines äußeren Umfangs der Ringscheibe (21) fluiddicht verbunden ist, so dass ein Entlüftungsvolumen (23) bereitgestellt ist, das durch das Ventilgehäuse (8), das Ablaufteil (13) und die Ringscheibe (21) begrenzt ist, oder
b) eine Kombination aus einer Membran (27) und mindestens einem bistabilen Element (28), wobei die Membran (27) fluiddicht mit einer Außenfläche (22) des Ablaufteils (13) entlang eines inneren Umfangs der Membran (27) fluiddicht verbunden ist und mit einer Innenfläche (17) des Ventilgehäuses (8) entlang eines äußeren Umfangs der Membran (27) fluiddicht verbunden ist, so dass ein Entlüftungsvolumen (23) bereitgestellt ist, das durch das Ventilgehäuse (8), das Ablaufteil (13) und die Membran (27) begrenzt ist, und wobei das mindestens eine bistabile Element (28) in Umfangsrichtung angeordnet ist und sich zwischen der Wand (19) des Ablaufteils (13) und der Innenfläche (17) des Ventilgehäuses (8) erstreckt,
wobei der Ablaufkanal (20) über eine zweite Öffnung (24), die in der Wand (19) des Ablaufteils (13) bereitgestellt ist, mit dem Entlüftungsvolumen (23) in Fluidkommunikation ist,
wobei das verschiebbare Element (7) Folgendes annehmen kann:
- eine geschlossene Position, in der der Ventilkegel (12) in dichtendem Eingriff mit dem Ventilsitz (9) ist, so dass keine Fluidkommunikation zwischen dem zweiten Durchgang (15) und dem Ablaufkanal (20) besteht, und
- eine offene Position, in der der Ventilkegel (12) nicht mit dem Ventilsitz (9) in Eingriff ist, so dass der zweite Durchgang (15) über den ersten Durchgang (11), das Entlüftungsvolumen (23) und die zweite Öffnung (24) mit dem Ablaufkanal (20) in Fluidkommunikation ist, und
wobei das verschiebbare Element (7) konfiguriert ist, um sich bei Anwendung einer Aktivierungskraft auf das verschiebbare Element (7) in dessen Längsrichtung von der geschlossenen in die offene Position zu bewegen.

2. Entlüftungsventil (2) nach Anspruch 1, wobei die erste Öffnung (10) und das verschiebbare Element (7) so dimensioniert sind, dass mindestens ein Teil des ersten Durchgangs (11) dazwischen ausgebildet ist.

3. Entlüftungsventil (2) nach Anspruch 1 oder 2, wobei mindestens ein Teil des ersten Durchgangs (11) durch mindestens eine dritte Öffnung (26) in dem Ventilsitz (9) ausgebildet ist, wobei die mindestens eine dritte Öffnung (26) so angeordnet ist, dass es während der Verwendung keinen Fluss von Fluid dort hindurch gibt, wenn das verschiebbare Element (7) in der geschlossenen Position ist.

4. Entlüftungsventil (2) nach einem der vorhergehenden Ansprüche, wobei das Entlüftungsventil (2) eine einheitliche Komponente ist.

5. Entlüftungsventil (2) nach einem der vorhergehenden Ansprüche, wobei das Entlüftungsventil (2) durch additives Herstellen gemacht worden ist.

6. Entlüftungsventil (2) nach einem der vorhergehenden Ansprüche, wobei das Entlüftungsventil (2) konfiguriert ist, um die Aktivierungskraft manuell aufzubringen, wie das Entlüftungsventil (2), das mit mindestens einer Greiffläche (22) bereitgestellt ist.

7. Entlüftungsventil (2) nach einem der Ansprüche 1-5, wobei das Entlüftungsventil (2) konfiguriert ist, um die Aktivierungskraft durch einen Aktuator aufzubringen, wie einen Aktuator, der von einer Steuereinheit betrieben wird.

8. Entlüftungsventil (2) nach einem der vorhergehenden Ansprüche, wenn es mindestens ein bistabiles Element (28) umfasst, wobei das mindestens eine bistabile Element (28) eine Vielzahl von verformbaren Stiften ist.

9. Entlüftungsventil (2) nach einem der vorhergehenden Ansprüche, wobei der dichtende Eingriff zwischen dem Ventilkegel (12) und dem Ventilsitz (9) durch entsprechend geformte Dichtflächen erhalten wird.

10. Entlüftungsventil (2) nach einem der vorhergehenden Ansprüche, wobei mindestens ein Teil des Ventilkegels (12) aus einem elastischen Material, wie Gummi oder TPE, gemacht ist, das sich durch Eingriff mit dem Ventilsitz (9) elastisch verformen kann.

11. Entlüftungsventil (2) nach einem der vorhergehenden Ansprüche, wobei der Ablaufteil (13) konfiguriert ist, um während der Verwendung des Entlüftungsventils (2) mit einem assoziierten Ablaufelement (6), wie einem Schlauch, verbunden zu werden.

12. Entlüftungsventil (2) nach Anspruch 11, wobei das Ablaufteil (13) konfiguriert ist, um mit dem assoziierten Ablaufelement (6) während der Verwendung des Entlüftungsventils (2) auf solche Weise verbunden zu werden, dass sich das Ablaufelement (6) axial von dem Ablaufteil (13) weg erstreckt.

13. Entlüftungsventil (2) nach einem der vorhergehenden Ansprüche, wobei das Ventilgehäuse (8) konfiguriert ist, um an einer Pumpenkomponente (3), wie einem Pumpengehäuse, befestigt zu werden, die eine Einhausung umgibt, die während der Verwendung mindestens gelegentlich entlüftet werden soll.

14. Pumpenkomponente (3), die eine Einhausung (4) umgibt, die während der Verwendung mindestens gelegentlich entlüftet werden soll, wobei die Pumpenkomponente (3) ein Entlüftungsventil (2) umfasst, das einstückig mit der Pumpenkomponente (3) gemacht ist, wobei das Entlüftungsventil (2) ein Entlüftungsventil (2) nach einem der Ansprüche 1 bis 12 ist.

15. Verfahren zum Herstellen eines Entlüftungsventils (2) nach einem der Ansprüche 1 bis 13 oder einer Pumpenkomponente (3) nach Anspruch 14, wobei das Herstellen durch additives Herstellen erfolgt.

## Revendications

1. Soupape d'évent (2) destiné à la purge d'une enveloppe (4), telle qu'un volume interne d'une pompe (1), au moins occasionnellement au cours de l'utilisation, la soupape d'évent (2) comprenant :
- un boîtier (8) de soupape comprenant un siège (9) de soupape circonférentiel et s'étendant vers l'intérieur, le siège (9) de soupape présentant une première ouverture (10),
- un premier passage (11) à travers le siège (9) de soupape,
- un élément mobile (7) ayant une extension longitudinale et étant disposé à travers la première ouverture (10) de sorte qu'il est mobile longitudinalement, l'élément mobile (7) comprenant :
- un opercule (12) de soupape qui est situé à un premier côté du siège (9) de soupape, l'opercule (12) de soupape présentant :
- une région circonférentielle (14) de soupape dimensionnée, façonnée, et disposée pour former un second passage (15) s'étendant depuis l'enveloppe (4) devant être purgée au cours de l'utilisation de la soupape d'évent (2) vers le siège (9) de soupape, et
- une surface terminale (18) configurée pour être tournée vers l'enveloppe (4) devant être purgée au cours de l'utilisation de la soupape d'évent (2), et
- une partie de décharge (13) qui est située à un second côté du siège (9) de soupape, la partie de décharge (13) comportant une paroi (19) entourant un canal de décharge interne (20), et
**caractérisée par** :
a) un disque annulaire (21) qui est raccordé de façon étanche aux fluides à une surface externe (22) de la partie de décharge (13) le long d'une circonférence interne du disque annulaire (21) et raccordé de façon étanche aux fluides à une surface interne (17) du boîtier (8) de soupape le long d'une circonférence externe du disque annulaire (21), de sorte qu'un volume de purge (23) est réalisé, délimité par le boîtier (8) de soupape, la partie de décharge (13), et le disque annulaire (21), ou
b) une combinaison d'une membrane (27) et d'au moins un élément bistable (28), la membrane (27) étant raccordée de façon étanche aux fluides à une surface externe (22) de la partie de décharge (13) le long d'une circonférence interne de la membrane (27) et raccordée de façon étanche aux fluides à une surface interne (17) du boîtier (8) de soupape le long d'une circonférence externe de la membrane (27), de sorte qu'un volume de purge (23) est réalisé, délimité par le boîtier (8) de soupape, la partie de décharge (13), et la membrane (27) ; et ledit au moins une élément bistable (28) étant disposé circonférentiellement et s'étendant entre la paroi (19) de la partie de décharge (13) et la surface interne (17) du boîtier (8) de soupape,
dans laquelle le canal de décharge (20) est en communication fluidique avec le volume de purge (23) via une seconde ouverture (24) ménagée dans la paroi (19) de la partie de décharge (13),
dans laquelle l'élément mobile (7) peut prendre :
- une position fermée dans laquelle l'opercule (12) de soupape est en engagement d'obturation avec le siège (9) de soupape de sorte qu'il n'y a pas de communication fluidique entre le second passage (15) et le canal de décharge (20), et
- une position ouverte dans laquelle l'opercule (12) de soupape est hors d'engagement avec le siège (9) de soupape de sorte que le second passage (15) est en communication fluidique avec le canal de décharge (20) via le premier passage (11), le volume de purge (23), et la seconde ouverture (24), et
dans laquelle l'élément mobile (7) est configuré pour se déplacer de la position fermée à la position ouverte lors de l'application d'une force d'activation sur l'élément mobile (7) dans la direction longitudinale direction de ce dernier.

2. Soupape d'évent (2) selon la revendication 1, dans laquelle la première ouverture (10) et l'élément mobile (7) sont dimensionnés de telle façon qu'au moins une partie du premier passage (11) est formée entre eux.

3. Soupape d'évent (2) selon la revendication 1 ou 2, dans laquelle au moins une partie du premier passage (11) est formée par au moins une troisième ouverture (26) dans le siège (9) de soupape, ladite au moins une troisième ouverture (26) étant disposée de telle façon que, pendant l'utilisation, il n'y a pas de circulation de fluide à travers celle-ci lorsque l'élément mobile (7) est en la position fermée.

4. Soupape d'évent (2) selon l'une quelconque des revendications précédentes, dans laquelle la soupape d'évent (2) est un composant unitaire.

5. Soupape d'évent (2) selon l'une quelconque des revendications précédentes, dans laquelle la soupape d'évent (2) a été fabriquée par fabrication additive.

6. Soupape d'évent (2) selon l'une quelconque des revendications précédentes, dans laquelle la soupape d'évent (2) est configurée pour que la force d'activation soit appliquée manuellement, par exemple la soupape d'évent (2) étant munie d'au moins une surface de préhension (22).

7. Soupape d'évent (2) selon l'une quelconque des revendications 1-5, dans laquelle la soupape d'évent (2) est configurée pour que la force d'activation soit appliquée par un actionneur, tel qu'un actionneur manoeuvré par une unité de commande.

8. Soupape d'évent (2) selon l'une quelconque des revendications précédentes lorsqu'elle comprend au moins un élément bistable (28), dans laquelle ledit au moins un élément bistable (28) est une pluralité de broches déformables.

9. Soupape d'évent (2) selon l'une quelconque des revendications précédentes, dans laquelle l'engagement d'obturation entre l'opercule (12) de soupape et le siège (9) de soupape est obtenu par des surfaces d'étanchéité façonnées de façon correspondante.

10. Soupape d'évent (2) selon l'une quelconque des revendications précédentes, dans laquelle au moins une partie de l'opercule (12) de soupape est fabriquée à partir d'un matériau élastique, tel que le caoutchouc ou le TPE, susceptible de déformation élastique due à un engagement avec le siège (9) de soupape.

11. Soupape d'évent (2) selon l'une quelconque des revendications précédentes, dans laquelle la partie de décharge (13) est configurée pour être raccordée à un élément de décharge (6) associé, tel qu'un tuyau, au cours de l'utilisation de la soupape d'évent (2).

12. Soupape d'évent (2) selon la revendication 11, dans laquelle la partie de décharge (13) est configurée pour être raccordée à l'élément de décharge (6) associé, au cours de l'utilisation de la soupape d'évent (2) d'une façon telle que l'élément de décharge (6) s'étend axialement en s'éloignant de la partie de décharge (13).

13. Soupape d'évent (2) selon l'une quelconque des revendications précédentes, dans laquelle le boîtier (8) de soupape est configuré pour être attaché à un composant (3) de pompe, tel qu'un carter de pompe, entourant une enveloppe devant être purgée au moins occasionnellement au cours de l'utilisation.

14. Composant (3) de pompe entourant une enveloppe (4) devant être purgée au moins occasionnellement au cours de l'utilisation, le composant (3) de pompe comprenant une soupape d'évent (2) faisant partie intégrante avec le composant (3) de pompe, dans lequel la soupape d'évent (2) est une soupape d'évent (2) selon l'une quelconque des revendications 1 à 12.

15. Procédé de fabrication d'une soupape d'évent (2) selon l'une quelconque des revendications 1 à 13 ou d'un composant (3) de pompe selon la revendication 14, dans lequel la fabrication est réalisée par fabrication additive.
